Europäisches Patentamt

(19) European Patent Office

Office européen des brevets

(11) Publication number: **0 193 340 B1**

(12) **EUROPEAN PATENT SPECIFICATION**

(45) Date of publication of patent specification: **10.04.91**  (51) Int. Cl.5: **B41J 2/315**, G01D 15/10

(21) Application number: **86301155.7**

(22) Date of filing: **19.02.86**

(54) Thermal printer.

(30) Priority: **22.02.85 JP 33715/85**

(43) Date of publication of application:
**03.09.86 Bulletin 86/36**

(45) Publication of the grant of the patent:
**10.04.91 Bulletin 91/15**

(84) Designated Contracting States:
**DE FR GB NL**

(56) References cited:
| | |
|---|---|
| **EP-A- 0 193 342** | **DE-A- 3 103 935** |
| **DE-A- 3 241 768** | **JP-A- 4 679 416** |
| **US-A- 4 365 254** | **US-A- 4 555 714** |

(73) Proprietor: **TOKYO ELECTRIC CO., LTD.**
**6-13, 2-chome, Nakameguro**
**Meguro-ku Tokyo(JP)**

(72) Inventor: **Sakura, Yasuhiro**
**382 Umena Mishima**
**Shizuoka(JP)**
Inventor: **Nimura, Hitoshi**
**100-18 Tsukamoto Kannami-cho**
**Tagata Shizuoka(JP)**
Inventor: **Ishikawa, Mamoru**
**66-5 Nakamaru Fuji**
**Shizuoka(JP)**

(74) Representative: **Daley, Michael John et al**
**F.J. CLEVELAND & COMPANY 40/43 Chancery Lane**
**London, WC2A 1JQ(GB)**

EP 0 193 340 B1

## Description

This invention relates to a weighing printing apparatus designed for weight and other data on a recording paper by means of a thermal printing head.

In general, employment of a thermal head as a printing means in a label printer or the like brings about a variety of advantages including the capability for forming any desired print pattern and realizing clear printing of a bar code. However, since the print colour on the label is merely a single colour print over the entirety thereof, when it is required to render some specific portion of the printed information conspicuous for the purpose of emphasis, such portion is customarily enclosed with a line or is printed in a thicker style. Although the above purpose can be achieved to a certain degree by conventional means, its effect is within the extent that some care is needed for recognition of the emphasis, and the emphasized portion does not stand out to the casual glance.

Improved emphasis or high-lighting may be accomplished by multi-colour printing, but this often requires two or more thermal heads and in consequence complicates the construction of the printing mechanism.

It is known from Japanese Patent Application 46-79416 to use a single thermal head and to vary the intensity of heat by changing the period during which electric current is applied to the head in order to actuate different colour couplers which exist in different layers and which have different development temperatures.

A similar thermal printer is known from DE-A-3 241 768. However, this thermal printer does not use multi-layer thermal paper, but a multi-colour ribbon, which transfers ink of one colour or another to plain recording paper.

It is also known from U.S Patent 4,365,254 to print a dichromatic paper by using two thermal heads and a recording material which involves special paper and requires printing to take place in several stages and at different times.

In this latter prior art printer, the recording paper is fed to a first printing head where an image of one colour is produced on the paper and then to a second head where an image of a different colour is produced on the paper. An electrical control circuit provides a first signal for data images of one colour and a second signal for data images of a second colour. A pair of shift registers receive the respective signals and pass these via latch circuits and drivers to the heating elements of the two thermal printing heads. A delay circuit provides a delay for one set of signals such that signals stored in one shift register and representing data of one colour are recorded on the paper when the heating elements of one printing head are selectively energised, whilst the delayed signals representative of data of the other colour are recorded on the paper by energisation of the corresponding heating elements of the other printing head after the paper has moved through a distance equivalent to the delay. However, the recording is effected by application to the heating elements of the identical heating energy regardless of the recording conditions.

According to our co-pending application 86 301 157.3 (Publication No: 0 193 342), there is provided a thermal printer for producing multicolour data images on thermosensitive recording paper in response to the application of different temperatures thereto, said recording paper having on its surface two colour forming layers (19BK and 19R) with dichromatic temperature characteristics, wherein the upper layer (19BK) is used for a basic colour such as black while the lower layer (19R) is used for an emphatic particular colour such as red), and comprising:

a single thermal printing head arranged to be arranged in juxtaposition to a path traversed by said paper and including a plurality of heating elements and capable of printing on the paper over the entire width thereof whilst being kept in contact therewith during its unidirectional motion, first and second print buffer means for accumulating data to be printed in said first and second different colours, and for feeding print data to control energisation of the heating elements of the thermal head control circuit means for controlling the output of each of said print buffer means and for controlling the temperature of printing of said thermal printing head by providing different printing temperatures for the contents of the print buffer means, said control circuit means having connected thereto a current-on time control circuit for differentially setting the on-time periods of a constant current to the heating elements of said thermal head in response to selection of said print buffer means, to provide short current-on periods (low temperature) for printing data of said first colour, and longer current-on periods (higher temperature) for printing data of the second different colour, and means to extend the current- on period from a low temperature mode to a high temperature mode only when the print buffer means for the said second different colour contains print data corresponding thereto.

It is an object of the present invention to display any desired part of, for example, a label which needs to be emphasized in a high temperature colour different from the low temperature colour and to render the characters of that portion more distinctive.

This object is achieved by the features claimed in claim 1 according to which the current-on time circuit is so adjusted that the current-on time is applied to said second print buffer means for a time such that thermal energy is provided with a temperature distribution gradient which in relation to the recording paper properties creates each printed dot having a dot character portion in the distinctive colour and a dot periphery in the basic colour to produce characters printed in said distinctive colour and outlined in said basic colour, while when the basic colour only is to be printed the current-on time is applied for a shorter time to provide each dot in the basic colour only.

According to a preferred arrangement, the present invention is characterised in that flags, e.g. basic colour = 0 distinctive colour = 1 for selecting a basic colour print or a distinctive colour print are stored in flag memories by means of a keyboard or in response to flag setting commands, basic colour print data being produced for the first print buffer means and distinctive colour print data being produced for the second print buffer means in accordance with the selection flags.

The invention also provides a method of using such a thermal printer for producing an image on thermosensitive paper in which characters are printed in a distinctive colour and outlined in a basic colour by applying current for a time such that thermal energy is provided with a temperature gradient in relation to the recording paper properties to provide said colour outlined characters.

The printer may include a thermal head containing a multiplicity of heating elements and capable of printing the recording paper over the entire width thereof while being kept in contact therewith during its unidirectional motion.

Following is description by way of example only and with reference to the accompanying drawings of methods of carrying the invention into effect.

In the drawings:-
Figure 1 is a plan view of a label.
Figure 2 is a side view of a partial mechanism in a label printer.
Figure 3 is a sectional view showing an enlarged portion of the label.
Figure 4 illustrates a temperature distribution in the label.
Figure 5 is a block diagram of electric circuits, and
Figure 6 is a timing chart.

Hereinafter an exemplary embodiment of the present invention will be described with reference to the accompanying drawings. First, as illustrated in Figure 2, rectangular labels 1 as recording paper are attached at spaced intervals on a longitudinal carrier sheet 2 which is wound on a roll 3. The sheet 2 is advanced via a platen 5 driven by a pulse motor 4, and is bent about a label stripper plate 6 and then is wound, by way of a roller 7, around a takeup spool 9 rotated by a takeup motor 8. A thermal printer head 10 is located juxtaposed platen 5, and the label 1 separated by the label stripper plate 6 is forwarded to a label detector 11, which then detects the presence or absence of the label 1 photoelectrically while simultaneously detecting the passage and hence the time of passing of its leading edge.

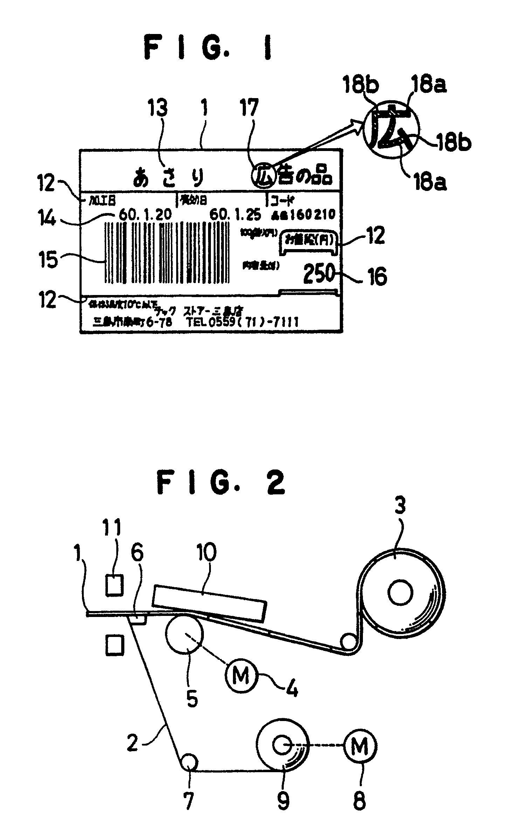

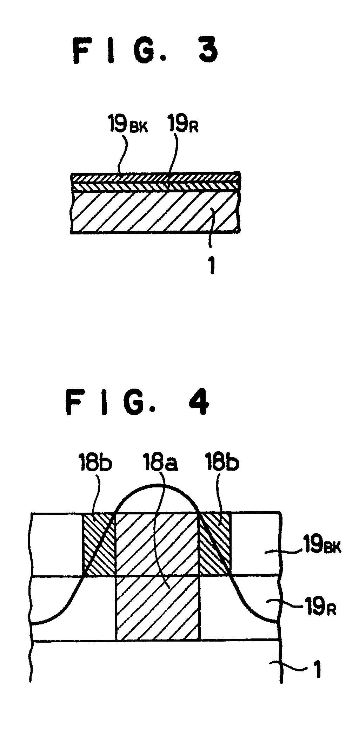

Figure 1 shows exemplary contents printed on the label 1. Some information 12 may be preprinted thereon, such information may include production data, efficacy data, code, article number, unit price per 100g, quantity (g) shop name, partition line (printed in, e.g. blue); and price (printed in, e.g. white on red ground). In addition thereto, specific information 17 including article name 13, date 14, bar code 15, data 16, "advertising data" and so forth is printed by the thermal head 10. The "advertising data" in the specific information 17 is the portion to be emphasized in this embodiment, and it is printed by the undermentioned means in a high temperature printing colour which is different from the low temperature printing colour of the other printed portions. In further detail, the label 1 has, on its surface, two colour forming layers 19BK and 19R with dichromatic temperature characteristics as shown in Figure 3, wherein the upper colour forming layer 19BK is used for a basic colour such as black while the lower colour forming layer 19R is used for an emphatic particular colour such as red. In this example, when the current supplied to the heating elements of the thermal head 10 is kept constant, the low temperature printing colour (black) is formed on the label 1 in a low temperature mode during which the current on-time is short, and the high temperature printing colour (red) is formed in a high temperature mode during which the current on-time is long.

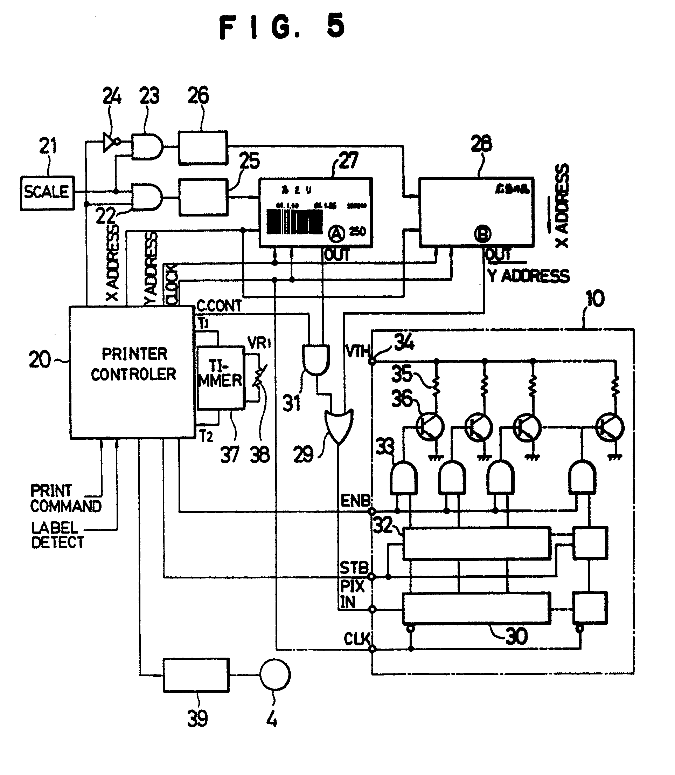

The electric circuit configuration is shown in Figure 5 in which printer controller 20 is so incorporated as to operate in response to a print command or to a label detection signal. A scale 21 is connected to one input of each of two AND gates 22 and 23, and the controller 20 is connected either directly or through an inverter 24 to another input of each of the AND gates 22 and 23. A first print buffer 27 and a second print buffer 28 are connected via character generator converters 25 and 26 respectively to the outputs of the AND gates 22 and 23. The controller 20 is further connected via an X address line, a Y address line and a clock line to both the print buffers 27 and 28.

The second print buffer 28 is connected via an OR gate 29 to a shift register 30 in the thermal head 10. Meanwhile the first print buffer 27 is connected to the input of an AND gate 31 together with a colour control signal (C. CONT) obtained from the printer controller 20, and the AND gate 31 is connected to the OR gate 29.

In the internal structure of the thermal head 10, the following operation is performed. First, data of the print buffer 28 and, if a C.CONT signal is high (see later), of the print buffer 27 are inputted bit by bit to shiff register 30 by the use of clock pulses (CLK), and the content of the shift register 30 is transferred bit by bit to a latch circuit 32, which is connnected in parallel thereto, by the use of a strobe signal (STB). To the latch circuit 32 are connected AND gates 33 which control the current fed to the heating elements 35 connected in common to a power supply 34 via respective amplifiers 36. The AND gates 33 are opened by an enable signal (ENB).

A timer 37 serving as a current on-time control circuit is connected to the printer controller 20. The timer 37 is started in response to a signal representative of a time T1 and functions to determine a time T2, during which the contents of both the first print buffer 27 and the second print buffer 28 are printed simultaneously, as will be described later. A variable resistor 38 is connected to the timer 37 for adjusting the time T2.

Furthermore, a motor driver 39 coupled to the pulse motor 4 is connected to the printer controller 20 so as to control the forward motion of the label 1.

In the structure mentioned above, a strobe signal STB and an enable signal ENB are generated respectively at the rise of T1 and the rise of T2. Assume now that the period T1 corresponds to the time required for printing one line in a high temperature printing colour on the label 1, and the pulse motor 4 is driven cyclically per T1 to feed the label 1 by one line. It is defined here that "one-line printing" relates to one line of unitary dots, not to one line of characters. The time T2 is determined by the timer 37, and the period T1 is divided into the time T2 and the time (T1 - T2). It is supposed here that the output of the timer 37 is turned to a high level after the lapse of T2 from the start of T1.

The printing operation will be described below with the first print buffer 27 referred to as Ⓐ memory and the second print buffer 28 as Ⓑ memory. Regarding the contents stored in the Ⓐ and Ⓑ memories, X addresses denote those for individual lines, and Y addresses denote those in each line. Consequently, the print contents of 0, 1, 2 .... Y, Y are existent in each of the X addresses.

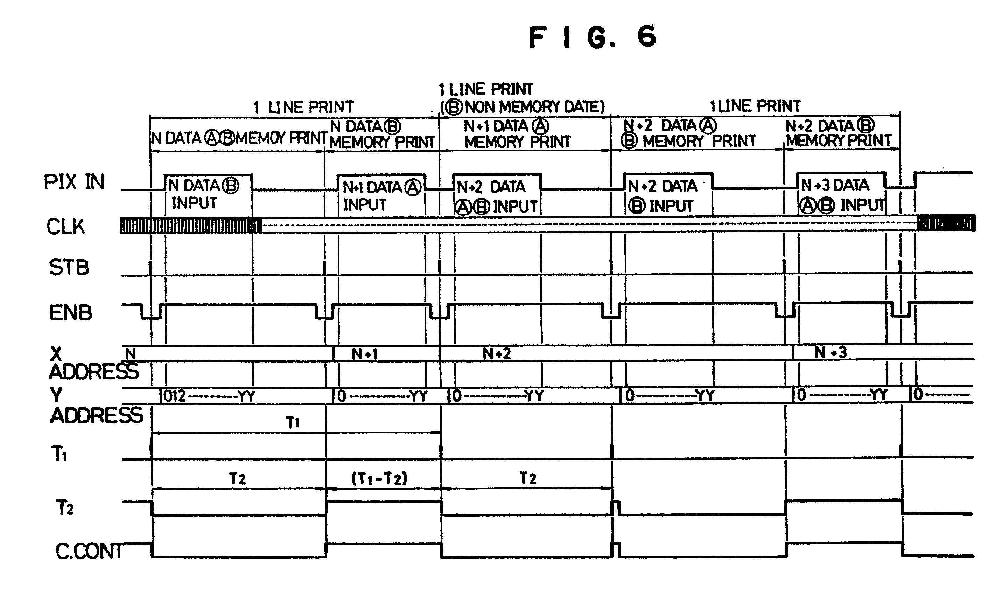

Referring now to the timing chart of Figure 6, the operation starts from "N DATA Ⓐ  Ⓑ MEMORY PRINT". In this portion, the heating elements 35 begin to be energized according to the data already inputted to the shift register 30 in response to the STB signal and the ENB signal based on T1. Since T2 is still at a low level in this stage, the C. CONT signal also remains at a low level and therefore so serves as not to feed the output of the Ⓐ memory to the thermal head 10. Consequently, at this moment, input data to the thermal head 10 is merely the content of the Ⓑ memory, and the content actually printed is based on the data inputted immediately anterior to this stage.

After the lapse of the time T2, the content of the Ⓑ memory inputted to the shift register 30 is then applied to the latch circuit 32 to energize the heating elements 35. Consequently the content of the Ⓑ memory inputted previously is printed. Since T2 is at a high level, the C. CONT signal is also at a high level so that the data from both the Ⓐ and Ⓑ memories are inputted to the shift register 30 in the thermal head 10.

The label 1 fed by one line cyclically in the period T1 receives the combined contents of the Ⓐ and Ⓑ memories and the content of the Ⓑ memory alternately within the time length divided into a time (T1 - T2) and a time T2, and is so processed as to print the received contents sequentially. Since the current on-time for energization including merely T2 becomes short to induce a low temperature, the content for the general print data such as the article name 13 stored in the Ⓐ memory is printed in the basic colour (black). Meanwhile, the specific information 17 of "advertising data" in the content of the Ⓑ memory is printed in the high temperature printing colour (red) as the heating elements 35 are energized for the time T1 which is long to induce a high temperature. Thus, the resultant colour comes to be different from the other information such as the article name 13 and so forth which are printed only within the short energization time T2, whereby the specific information 17 is rendered distinguishable with remarkable definition.

The operation described above is performed relative to the print line including the specific information 17 which is to be printed in the different particular colour. In this embodiment, the print time is shortened for any print line of the bar code or the like where none of the different particular colour is required, as shown in the second one-line print portion in Figure 6.

It corresponds to the case where none of the specific information 17 is stored in the related B memory, and the date is stored merely in the A memory alone. Then, prior to lapse of the time T1, the current is supplied during the time T2 required for printing the article name 13 and so forth and, posterior to the basic colour (black) print time, a pulse of T1 is outputted for printing the next line.

Therefore, the required print time is shortened in the line without any of the specific information 17 to consequently reduce the entire label issuing time, hence enhancing the operational efficiency thereof. In other words, the current on-time corresponding to the print time is extended in this embodiment only for the line requiring print in the different particular colour.

In a practical operation, the variable resistor 38 is adjusted properly to change the time T2. Such adjustment is executed in accordance with the paper quality of the label 1 and so forth.

In this embodiment, the aforesaid characters representing "advertising data" are visually emphasized in red and edged in black along the contours thereof, as shown in Figure 1 with an enlarged view enclosed with a circle. A character portion 18a is printed to appear red in a high-temperature particular colour print mode while a contour portion 18b is printed to appear black in a low temperature basic colour print mode, so that the character portion 18a is edged in black. Such edged print is realized by utilizing the gradient of the temperature distribution which is obtained through control of the current on-time to adjust the thermal energy transmitted from the heating elements 35 to the label 1. The state mentioned is illustrated in Figure 4, where the thermal energy generated from the heating elements 35 is imparted first to the basic colour forming layer 19BK of the label 1 in an amount corresponding to unitary dots. Since the current on-time is set to be longer in the red print mode, the temperature distribution obtained in this mode comes to have the characteristic of Figure 4 with a gradient extending wider than the dot from the basic colour forming layer 19BK toward the particular colour forming layer 19R. Therefore, when the heat generating current is applied for the same period of time as that in the red print mode, the dot body (i.e. character portion 18a) is subjected to a predetermined amount of high-temperature energy and is thereby printed in red, while the dot periphery (i.e. contour portion 18b) is subjected to a smaller amount of thermal energy and is thereby printed in black at a low temperature to eventually edge the character portion. It is also possible to bring out red only in the label 1 by applying high thermal energy thereto for a short period of time, such control system induces a narrower gradient in the temperature distribution and hence causes red print in the dot body alone. Accordingly the current on-time control system employed in the above exemplary embodiment applied lower thermal energy to induce a gradient in the temperature distribution. Thus, the characters of the specific information 17 are printed in red with black edges and are thereby rendered legible distinctly with visual emphasis. It is to be especially noted that none of the edging print data is required in the embodiment since it utilizes the temperature gradient of the heating elements 35 for the label 1, hence simplifying the control.

Although in the above embodiment the "advertising data" is selectively printed in a different particular colour as the specific information 17, such particular colour printing may also be performed under the condition that individual items of various print groups (peculiar information 12) determined by preprinting on the label 1 are selectable with mutual combination. In a modification of using a non-preprinted label 1, the peculiar information 12 including a production date and so forth may be printed in a different particular colour by the thermal head 10 in the same manner as the aforementioned, while the general data including an article name 13 and so forth may be printed in a basic colour. Furthermore, when the characters such as "advertising data" to be emphasized are printed on a preprinted label 1, as already described in connection with the foregoing embodiment, a sum (price) calculated from (scaled weight) x (unit price) may be printed in the different particular colour to become conspicuous. Especially when the unit price is low as in this exemplary embodiment where the emphasized message includes "advertising data", it is preferred that the unit price be printed in the different particular colour (red). Also in such particular colour printing mode, the emphatic characters can be edged in black as well. In such particular-colour printing operation, flags (e.g. red = 1, black = 0) for selecting a red print mode or a black print mode may be previously stored in flag memories by a keyboard or flag setting commands with respect to the individual items of article name, auxiliary characters (e.g. advertising data), weight and price. In the stage of preparing memory data to be stored in the print buffers 27 and 28, black-forming data may be produced for the print buffer 27 and red-forming data for the print buffer 28 respectively in accordance with such selection flags.

## Claims

1. A thermal printer for producing multicolour data images on thermosensitive recording paper (1) in response to the application of different temperatures thereto, said recording paper having on its surface two colour forming layers (19BK and 19R) with dichromatic temperature characteristics, wherein the upper layer (19BK) is used for a basic colour such as black while the lower layer (19R) is used for an emphatic colour such as red, and comprising a single thermal printing head arranged in juxtaposition to a path traversed by said paper and including a plurality of heating elements (35), and capable of printing on the paper over the entire width thereof whilst being kept in contact therewith during its unidirectional motion, characterised by first and second print buffer means (27), (28) for accumulating data to be printed in said basic colour and said second colour respectively distinctive from said basic colour, and for feeding print data to control energisation of the heating elements of the thermal head (35), control circuit means (20) for controlling the output of each of said print buffer means and for controlling the temperature of printing of said thermal printing head by providing a first temperature for the contents of said first print buffer means applicable to data of said basic colour, and providing a second printing temperature for the contents of the second print buffer means applicable to data of said distinctive colour, said control circuit means (20) having connected thereto a current-on time control circuit (37,38) arranged to control the current-on time of a constant current to the heating elements (35) of the thermal printing head in respect of the first and second print buffer means containing data to be printed in said basic colour and said second colour, said current-on time circuit (37,38) being so adjusted that the current-on time is applied to said second print buffer means for a time such that thermal energy is provided with a temperature distribution gradient which in relation to the recording paper properties creates each printed dot having a dot character portion (18a) in the distinctive colour and a dot periphery (18b) in the basic colour to produce characters printed in said distinctive colour and outlined in said basic colour, while when the basic colour only is to be printed the current-on time is applied for a shorter time to provide each dot in the basic colour only.

2. A thermal printer as claimed in Claim 1 characterised by a magazine means (30) for the supply of recording paper to the printing head, the recording paper being in the form of individual labels carried on a backing sheet and said paper having pre-printed characters thereon and desired print contents being selectively printable on the basic or different particular colours, i.e. low temperature current-on time short or high temperature current-on time long, with respect to the individual items of various print groups determined by such pre-printing.

3. A thermal printer as claimed in Claim 1 characterised in that flags, e.g. basic colour = 0 distinctive colour = 1 for selecting a basic colour print or a distinctive colour print are stored in flag memories by means of a keyboard or in response to flag setting commands, basic colour print data being produced for the first print buffer means and distinctive colour print data being produced for the second print buffer means in accordance with the selection flags.

4. A method of using a thermal printer as defined in any one of the preceding claims for producing an image on thermosensitive paper in which characters are printed in a distinctive colour and outlined in a basic colour by applying current for a time such that thermal energy is provided with a temperature gradient in relation to the recording paper properties to provide said colour outlined characters.

**Revendications**

1. Une imprimante thermique pour la production d'images de données multicolores sur un papier d'enregistrement thermosensible (1) en réponse à l'application de différentes températures à celui-ci, ledit papier d'enregistrement portant sur sa surface deux couches de formation de couleur (19BK et 19R) ayant des caractéristiques de température dichromatiques, dans laquelle la couche supérieure (19BK) sert de couleur de base comme par exemple du noir tandis que la couche inférieure (19R) sert pour former une couleur marquante particulière telle que du rouge, et comprenant une seule tête d'impression thermique agencée en juxtaposition à une trajectoire suivie par ledit papier et comprenant un ensemble d'éléments chauffants (35), capables d'imprimer le papier sur toute sa largeur, tout en étant maintenue en contact avec lui pendant son mouvement monodirectionnel, caractérisée par un premier et un second moyens de mémoire-tampon d'impression (27), (28) pour accumuler des données à imprimer avec lesdites première et seconde couleurs différentes et pour appliquer des données d'impression afin de commander l'excitation des éléments chauffants de la tête thermique (35), des moyens de circuit de commande (20) pour commander la sortie de chacun desdits moyens de mémoire-tampon d'impression et pour commander la température d'impression de ladite tête d'impression thermique en établissant une première température pour les contenus dudit premier moyen de mémoire-tampon d'impression applicable aux données de ladite couleur de base et pour établir une seconde température d'impression pour les contenus du second moyen de mémoire-tampon d'impression applicable aux données de ladite couleur distinctive, lesdits moyens de circuits de commande (20) étant connectés à un circuit (37, 38) de commande du temps d'application du courant agencé pour commander la durée d'application d'un courant constant aux éléments chauffants (35) de la tête d'impression thermique par rapport au premier et second moyens de mémoire-tampon d'impression contenant des données à imprimer dans ladite couleur de base et ladite seconde couleur, ledit circuit de durée d'application du courant (37, 38) étant réglé de manière que la durée d'application définie pour ledit second moyen de mémoire-tampon d'impression corresponde à un temps tel que l'énergie thermique soit appliquée avec un gradient de répartition de température qui, compte-tenu des propriétés du papier d'enregistrement crée chaque point imprimé avec une partie des points des caractères (18a) dans la couleur distinctive et une périphérie des points (18b) dans la couleur de base de manière à obtenir des caractères imprimés dans ladite couleur distinctive et bordés de ladite couleur de base, alors que si la couleur de base doit seule être imprimée, la durée d'application du courant est réduite à un temps plus court afin de donner à chaque point la couleur de base uniquement.

2. Une imprimante thermique selon la revendication 1, caractérisée par un moyen de magasin (30) pour appliquer du papier d'enregistrement à la tête d'impression, le papier d'enregistrement prenant la forme d'étiquettes individuelles disposées sur une couche de support et ledit papier portant des caractères préimprimés et le contenu désiré des données d'impression pouvant être imprimé de manière sélective avec la couleur de base ou avec une couleur particulière différente, à savoir la durée d'application du courant pour la basse température étant court ou la durée d'application du courant pour la haute température étant long, par rapport à des éléments individuels de différents groupes à imprimer déterminés par ladite impression préalable.

3. Une imprimante thermique selon la revendication 1, caractérisée en ce que des indicateurs, par exemple couleur de base = 0, couleur distinctive = 1, pour sélectionner une impression en couleur de base ou une impression en couleur distinctive sont stockés dans des mémoires d'indicateurs au moyen d'un clavier ou en réponse à des commandes de positionnement d'indicateurs, des données d'impression dans la couleur de base étant formées pour le premier moyen de mémoire-tampon d'impression et des données d'impression en couleur distinctives étant formées pour le second moyen de mémoire-tampon d'impression selon la sélection des indicateurs.

4. Un procédé d'emploi d'une imprimante thermique tel que défini dans l'une quelconque des revendications précédentes pour former, sur un papier thermosensible, une image dans laquelle des caractères sont imprimés dans une couleur distinctive et bordés d'une couleur de base en appliquant un courant pendant un temps tel que l'énergie thermique soit appliquée avec un certain gradient de température par rapport aux propriétés du papier d'enregistrement afin d'obtenir lesdits caractères bordés de couleur.

## Ansprüche

1. Thermodrucker zum Erzeugen mehrfarbiger Datenbilder auf thermoempfindlichem Aufzeichnungspapier (1) in Abhängigkeit von der Zuführung unterschiedlicher Temperaturen zu ihm, wobei das Aufzeichnungspapier auf seiner Oberfläche zwei farbbildende Schichten (19BK und 19R) mit dichromatischen Temperatureigenschaften aufweist, wobei die obere Schicht (19BK) als Basisfarbe, beispielsweise Schwarz, verwendet wird, während die untere Schicht (19R) für eine Signalfarbe, wie beispielsweise Rot, verwendet wird, und enthaltend einen einzigen Thermodruckkopf, der über einem Pfad angeordnet ist, der von dem Papier durchquert wird, welcher Druckkopf mehrere Heizelemente (35) enthält und in der Lage ist, auf dem Papier über der gesamten Breite derselben zu drucken, während er mit ihm bei seiner unidirektionalen Bewegung in Berührung gehalten wird, **gekennzeichnet durch** erste und zweite Druckpuffereinrichtungen (27), (28) zum Sammeln von in der Basisfarbe bzw. der zweiten, von der Basisfarbe verschiedenen Farbe zu druckenden Daten und zum Zuführen von Druckdaten, um die Erregung der Heizelemente des Thermokopfes (35) zu steuern, eine Steuerschaltungseinrichtung (20) zum Steuern der Ausgabe einer jeden der Druckpuffereinrichtungen und zum Steuern der Drucktemperatur des Thermodruckkopfes durch Erzeugen einer ersten Temperatur für die Inhalte der ersten Druckpuffereinrichtung, die auf Daten der Basisfarbe anwendbar ist, und zum Erzeugen einer zweiten Drucktemperatur für die Inhalte der zweiten Druckpuffereinrichtung, die auf die Daten der sich unterscheidenden Farbe anwendbar sind, wobei mit der Steuerschaltungseinrichtung (20) eine Einschaltzeit-Steuerschaltung (37, 38) verbunden ist, die dazu eingerichtet ist, die Einschaltzeit eines Konstantstromes zu den Heizelementen (35) des Thermodruckkopfs in Bezug auf die ersten und zweiten Druckpuffereinrichtungen zu steuern, die in der Basisfarbe und der zweiten Farbe zu druckenden Daten enthalten, wobei die Einschaltzeitschaltung (37,38) so eingestellt ist, daß die Einschaltzeit der zweiten Druckpuffereinrichtung für eine Zeit zugeführt wird, die derart ist, daß thermische Energie mit einem Temperaturverteilungsgradienten zugeführt wird, der in Bezug auf die Aufzeichnungspapiereigenschaften jeden gedruckten Punkt erzeugt, der einen Punktzeichenabschnitt (18a) in der anderen Farbe und einen Punktumfang (18b) in der Basisfarbe hat, um Zeichen zu erzeugen, die in der genannten anderen Farbe gedruckt und von der Basisfarbe umgrenzt sind, während, wenn nur die Basisfarbe zu drucken ist, die Einschaltzeit für eine kürzere Zeitdauer angewendet wird, damit jeder Punkt nur in der Basisfarbe erzeugt wird.

2. Thermodrucker nach Anspruch 1, **gekennzeichnet durch** eine Magazineinrichtung (30) für die Zuführung von Aufzeichnungspapier zum Druckkopf, wobei das Aufzeichnungspapier in Form einzelner Etiketten vorliegt, die auf einem Trägerblatt gehalten sind und das Papier darauf vorgedruckte Zeichen trägt und gewünschte Druckinhalte selektiv auf den Basis- oder anderen speziellen Farben druckbar sind, d.h. niedrige Temperatur, Einschaltzeit kurz oder hohe Temperatur, Einschaltzeit lang in Bezug auf die einzelnen Teile verschiedener Druckgruppen, die durch solches Vor-Drucken bestimmt sind.

3. Thermodrucker nach Anspruch 1, **dadurch gekennzeichnet**, daß Kennzeichen, z.B. Basisfarbe = 0, andere Farbe = 1, zum Auswählen eines Basisfarbdrucks oder eines Unterscheidungsfarbdrucks in Kennzeichenspeichern mittels einer Tastatur oder in Abhängigkeit von Kennzeichensetzbefehlen gespeichert werden, wobei Basisfarbdruckdaten für die erste Druckpuffereinrichtung und Unterscheidungsfarbdruckdaten für die zweite Druckpuffereinrichtung in Übereinstimmung mit den Auswahlkennzeichen erzeugt werden.

4. Verfahren zum Verwenden eines Thermodruckers nach einem der vorhergehenden Ansprüche zum Erzeugen eines Bildes auf thermoempfindlichen Papier, bei dem Zeichen in einer anderen Farbe gedruckt und von einer Basisfarbe umschlossen werden, indem Strom über eine solche Zeit zugeführt wird, daß thermische Energie mit einem Temperaturgradienten in Bezug auf die Aufzeichnungspapiereigenschaften erzeugt wird, daß die farbig umrissenen Zeichen erzeugt werden.

# F I G. 1

# F I G. 2

# F I G. 3

19BK   19R

1

# F I G. 4

18b   18a   18b

19BK

19R

1

# F I G. 5

FIG. 6